**Europäisches Patentamt**

**European Patent Office**

**Office européen des brevets**

(19)

(11) Veröffentlichungsnummer : **0 357 904 B1**

(12)

# EUROPÄISCHE PATENTSCHRIFT

(45) Veröffentlichungstag der Patentschrift :
**01.07.92 Patentblatt 92/27**

(51) Int. Cl.⁵ : **B23Q 3/154**, B25B 11/00

(21) Anmeldenummer : **89112247.5**

(22) Anmeldetag : **05.07.89**

(54) **Magnetspannplatte zum Aufspannen oder Heben von Werkstücken.**

(30) Priorität : **09.09.88 DE 3830685**

(43) Veröffentlichungstag der Anmeldung :
**14.03.90 Patentblatt 90/11**

(45) Bekanntmachung des Hinweises auf die
Patenterteilung :
**01.07.92 Patentblatt 92/27**

(84) Benannte Vertragsstaaten :
**AT BE CH DE ES FR GB IT LI NL SE**

(56) Entgegenhaltungen :
**DE-B- 1 291 698
DE-C- 3 237 102
DE-U- 8 502 555
DE-U- 8 605 593
FR-A- 2 513 160**

(73) Patentinhaber : **Horst Witte Entwicklungs- und
Vertriebs-KG
W-2122 Bleckede (DE)**

(72) Erfinder : **Witte, Horst
Auf dem Deich Nr. 2
W-2122 Bleckede/OT Radegast (DE)**

(74) Vertreter : **von Raffay, Vincenz, Dipl.-Ing. et al
Patentanwälte Raffay, Fleck & Partner
Postfach 32 32 17
W-2000 Hamburg 13 (DE)**

EP 0 357 904 B1

## Beschreibung

Die Erfindung betrifft eine kombinierte Vakuum-Magnetspannplatte nach dem Oberbegriff des Patentanspruches 1.

Aus der DE-PS 35 03 210 ist eine Spannvorrichtung bekanntgeworden, die die Kombination einer Magnetspannplatte mit einer Vakuumspannplatte darstellt. Die Spannplatte ist hierbei aus nicht-ferromagnetischem Material hergestellt. In dieser Spannplatte sind Bohrungen vorgesehen, die mit einer Vakuumsammelleitung verbunden sind, um das Vakuum auf die Werkstücke übertragen zu können. Durch die Öffnungen der Bohrungen in der Oberfläche der Spannplatte wird die glatte Oberfläche der Spannplatte unterbrochen. Dieses kann bei entsprechend empfindlichen Werkstücken zu Beschädigungen führen, da verhältnismäßig große Abschnitte, nämlich die Öffnungen, vorhanden sind, in denen eine Unterstützung des Werkstückes fehlt.

Der Erfindung liegt nun die Aufgabe zugrunde, eine Magnetspannplatte der eingangs genannten Art zu schaffen, die nicht nur Werkstücke aus unterschiedlichem Material, auch aus schwach oder nicht-magnetischem Material, sicher halten kann, sondern deren Oberfläche so gestaltet ist, daß an keiner Stelle die Unterstützung des Werkstückes fehlt, aber nach wie vor eine sichere und gute Übertragung des Vakuums (ungehinderter Luftdurchtritt) möglich ist.

Diese Aufgabe wird durch die Merkmale des Anspruches 1 gelöst.

Das feinporige Sintermetall füllt die Schlitze im Bereich der Oberfläche der Magnetspannplatte aus, wobei dieses Sintermetall luftdurchlässig ist und so eine sichere Übertragung und Anlegung des Vakuums ermöglicht. Es entstehen keine "Schwachstellen", an denen das Werkstück nicht unterstützt ist. Dieses ist bei dünnen, weichen und hochwertigen Werkstücken wichtig. Diese lassen sich sonst gar nicht oder nur mit der Gefahr der Beschädigung aufspannen. Wenn die Schlitze nur "teilweise" ausgefüllt sind, dann bedeutet dieses, daß unterhalb der Oberfläche ein Bereich in den Schlitzen vorhanden sein kann, in dem kein Sintermetall vorhanden ist.

Im folgenden wird die Erfindung unter Hinweis auf die Zeichnung anhand verschiedener Ausführungsbeispiele näher erläutert.

Es zeigt:
Fig. 1 eine Draufsicht auf eine Ausführungsform einer Magnetspannplatte nach der Erfindung;
Fig. 2 einen Schnitt gemäß der Linie IV-IV der Fig. 2;
Fig. 3 eine Draufsicht auf eine weitere Ausführungsform einer Magnetspannplatte nach der Erfindung;
Fig. 4 einen Schnitt gemäß der Linie VI-VI der Fig. 3;
Fig. 5 eine Draufsicht auf eine weitere Ausführungsform einer Magnetspannplatte nach der Erfindung;
Fig. 6 einen Schnitt gemäß der Linie X-X der Fig. 5.

Die in der Zeichnung dargestellte Magnetspannplatte ist grundsätzlich so aufgebaut, wie es bei bekannten Magnetspannplatten der Fall ist. Die einzelnen Polabschnitte sind mit 1 bezeichnet, wobei die Polarität Süd und Nord abwechselt und mit S und N bezeichnet ist. Seitlich an der Magnetspannplatte befindet sich ein geschlossener Vakuumkanal 7, in dem ein Schlauch 9 mit einer Dichtung 8 hin- und herbewegbar ist.

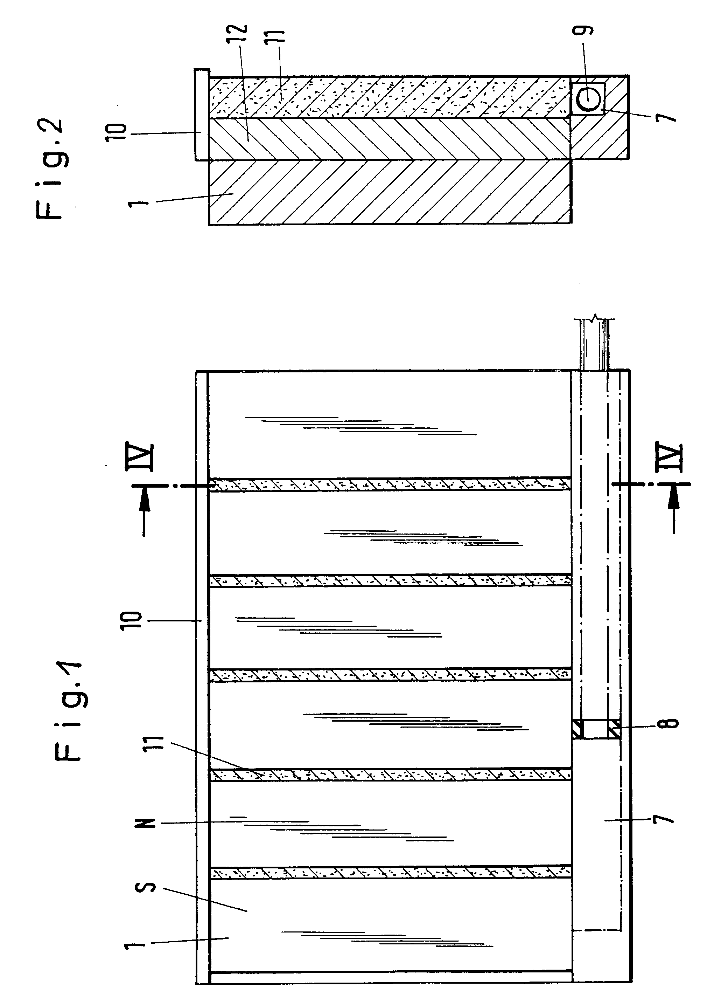

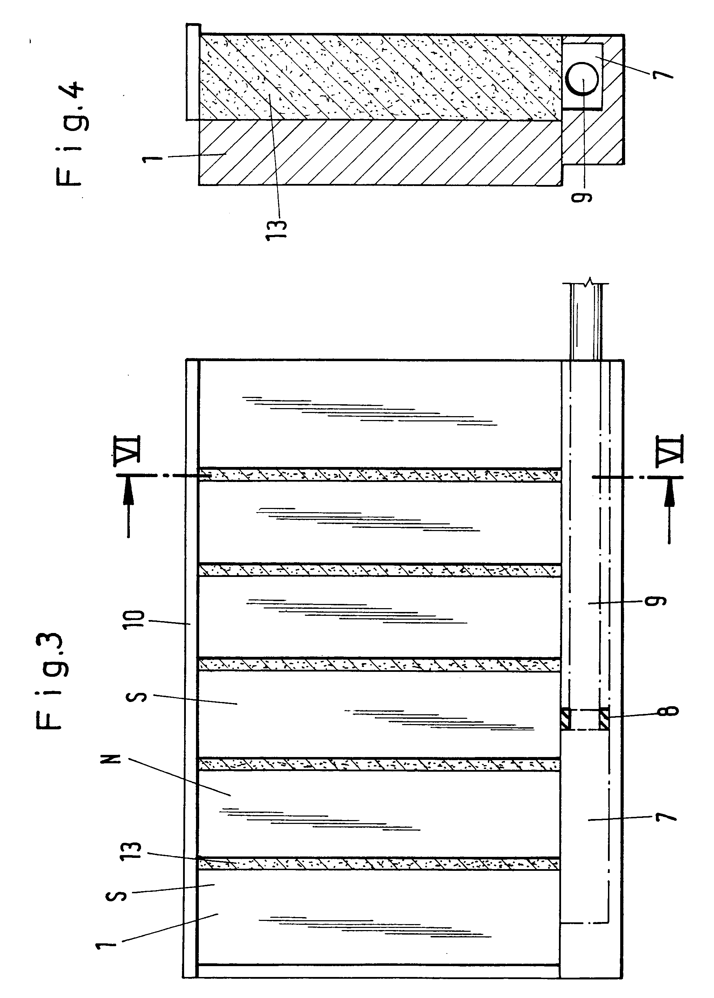

Bei der Ausführungsform nach den Fig. 1 und 2 sind die Polteilungen und die Schlitze kombiniert, d.h. die Schlitze zwischen den einzelnen magnetischen Polabschnitten 1 sind mit einem Sintermetall 11 teilweise gefüllt (siehe Fig. 3), das eine Vakuumübertragung ermöglicht und gleichzeitig nicht ferromagnetisch ist. Der weiter unten liegende Abschnitt 12 der Polteilungen ist mit einem normalen, nicht porösen und nicht ferromagnetischen Material gefüllt.

Beim Betrachten der Fig. 2 wird deutlich, daß der geschlossene Vakuumkanal 7 neben dem Abschnitt 1 angeordnet ist, der aus Sintermetall 11 besteht, so daß entsprechend der Stellung des Schlauches 9 Vakuum auf die einzelnen mit Sintermetall gefüllten Polteilungen 11 übertragen werden kann.

Die Ausführungsform nach den Fig. 3 und 4 unterscheidet sich dadurch von derjenigen nach den Fig. 1 und 2, daß der gesamte, die Polteilung bildende .Schlitz, mit einem nicht ferromagnetischen Sintermetall 13 gefüllt ist.

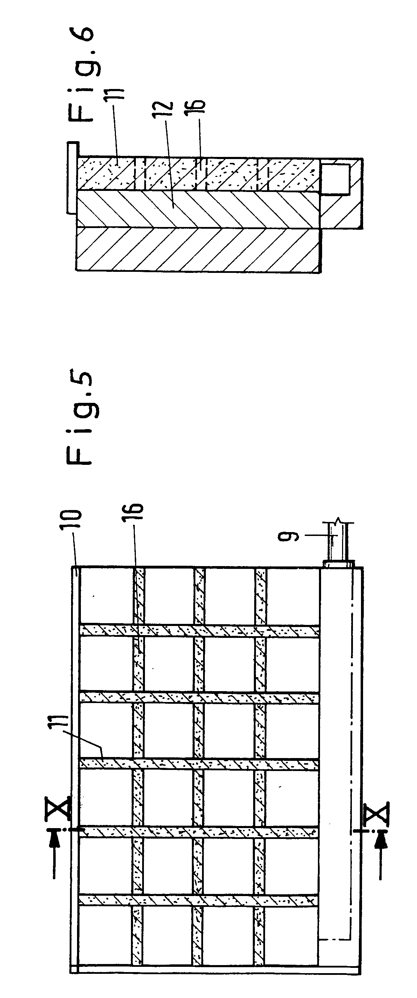

Die Ausführungsform nach den Fig. 5 und 6 unterscheidet sich dadurch von derjenigen nach den Fig. 1 und 2, daß zusätzlich noch querverlaufende Schlitze 16 vorgesehen sind, die mit feinporigem Sintermetall gefüllt sind. Der Schlauch 9 ist bei dieser Ausführungsform nicht verschiebbar, sondern versorgt den Vakuumkanal 7 über seine gesamte Länge.

## Patentansprüche

1. Kombinierte Vakuum-Magnetspannplatte zum Aufspannen oder Heben von Werkstücken mit einer Polteilung durch ein nicht-ferromagnetisches Material und mit in der Spannfläche vorgesehenen Öffnungen, die mit einer oder mehreren Vakuumleitungen verbunden sind, dadurch gekennzeichnet, daß die als Schlitze ausgebildeten Öffnungen die Polteilungen bilden und ganz oder teilweise mit nicht-ferromagnetischem, feinporigem Sintermetall (11,13,16) ausgefüllt sind.

2. Magnetspannplatte nach Anspruch 1, dadurch gekennzeichnet, daß die Vakuumleitung in an sich bekannter Weise durch einen geschlossenen Vakuumkanal (7) gebildet ist, in dem ein Zuleitungsschlauch (9) in Längsrichtung verschiebbar ist, wobei zu den Schlitzen im wesentlichen waagerecht verlaufende Vakuumverbindungsleitungen (6) führen, die im wesentlichen senkrecht zu dem geschlossenen Vakuumkanal (7) verlaufen.

3. Magnetspannplatte nach Anspruch 1 oder 2 , dadurch gekennzeichnet, daß die Vakuumleitung in an sich bekannter Weise durch einen geschlossenen Vakuumkanal (7) gebildet ist, in dem ein Zuleitungsschlauch (9) in Längsrichtung verschiebbar ist, wobei die Schlitze (11,13,15) im wesentlichen senkrecht zu dem Vakuumkanal (7) verlaufen.

## Claims

1. Combined vacuum - magnetic clamping plate for fixing or raising workpieces with a pole pitch through a non-ferromagnetic material and with openings provided in the plate surface, which are connected to one or more vacuum lines, characterized in that the openings constructed as slots and which form the pole pitches are wholly or partly filled with non-ferromagnetic, fine-pored sintered metal (11, 13, 16).

2. Magnetic clamping plate according to claim 1, characterized in that the vacuum line is formed in per se known manner by a closed vacuum channel (7), in which a feed tube (9) is longitudinally displaceable, substantially horizontally directed vacuum connecting lines (6) substantially at right angles to the closed vacuum channel (7) leading to the slots.

3. Magnetic clamping plate according to claims 1 or 2, characterized in that the vacuum line is in per se known manner formed by a closed vacuum channel (7), in which a feed tube (9) is longitudinally displaceable, the slots (11, 13, 15) running substantially at right angles to the vacuum channel (7).

## Revendications

1. Plateau de serrage à action combinée par le vide et magnétique, pour serrer ou lever des pièces façonnées, avec une séparation des pôles à l'aide d'un matériau non ferromagnétique et avec des ouvertures prévues dans la surface de serrage et reliées à une ou plusieurs conduites à vide, caractérisé en ce que les ouvertures, réalisées sous forme de fente, forment les séparations des pôles et sont remplies, entièrement ou partiellement, de métal fritté (11,13,16) à porosité fine et non ferromagnétique.

2. Plateau de serrage magnétique selon la revendication 1, caractérisé en ce que la conduite à vide est formée, de manière connue en soi, d'un canal à vide (7) fermé, dans lequel un tuyau d'amenée (9) est déplaçable en direction longitudinale, des conduites de liaison à vide (6), s'étendant sensiblement horizontalement et pratiquement perpendiculairement au canal à vide (7) fermé, menant aux fentes.

3. Plateau de serrage magnétique selon la revendication 1 ou 2, caractérisé en ce que la conduite à vide est formée, de manière connue en soi, par un canal à vide (7) fermé, dans lequel un tuyau d'amenée (9) est déplaçable en direction longitudinale, les fentes (11,13,15) s'étendant sensiblement perpendiculairement au canal à vide (7).

Fig.1

Fig.2

EP 0 357 904 B1

## Fig.3

## Fig.4

EP 0 357 904 B1

Fig.5

Fig.6

10

11

16

9

12

EP 0 357 904 B1